## Europäisches Patentamt
## European Patent Office
## Office européen des brevets

(19)

(11) Veröffentlichungsnummer: **0 015 539**
**B1**

(12)

# EUROPÄISCHE PATENTSCHRIFT

(45) Veröffentlichungstag der Patentschrift:
**05.05.82**

(51) Int. Cl.³: **A 01 D 45/02,** A 01 D 43/08

(21) Anmeldenummer: **80101089.3**

(22) Anmeldetag: **04.03.80**

(54) **Erntemaschine.**

(30) Priorität: **09.03.79 AT 1782/79**

(43) Veröffentlichungstag der Anmeldung:
**17.09.80 Patentblatt 80/19**

(45) Bekanntmachung des Hinweises auf die Patenterteilung:
**05.05.82 Patentblatt 82/18**

(84) Benannte Vertragsstaaten:
**CH DE FR IT NL**

(56) Entgegenhaltungen:
**DE-A-1 482 136**
**DE-A-1 121 181**
**FR-A-2 282 213**
**US-A-3 293 835**

(73) Patentinhaber: **Alois Pöttinger OHG, A-4710 Grieskirchen (AT)**

(72) Erfinder: **Rauscher, Sigurd, Sonnfeldsiedlung 24, A-4710 Grieskirchen (AT)**
Erfinder: **Leposa, Wolfgang, Sonnfeldsiedlung 30, A-4710 Grieskirchen (AT)**
Erfinder: **Schremmer, Wolfgang, A-4062 Thening 50 (AT)**
Erfinder: **Voraberger, Ulrich, Beethovenstrasse 4, A-4701 Bad Schallerbach (AT)**

(74) Vertreter: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Erntemaschine

Beschreibung

Die Erfindung bezieht sich auf eine Erntemaschine für landwirtschaftliches Gut mit einem Häckselwerk, einer diesem vorgeschalteten Einzugsvorrichtung und mit wenigstens einem an die Erntemaschine anbaubaren Erntevorsatz, der zum Aufnehmen des Gutes mittels Gleitsohlen über den Boden gleitet und angetriebene Arbeitsmittel enthält und mit einem Zwischenrahmen fest verbunden ist, der um eine im Bereich der Unterkante der Erntemaschine angeordnete, im wesentlichen horizontal sowie quer zur Fahrtrichtung der Erntemaschine verlaufende Schwenkachse frei höhenverschwenkbar gelagert ist, wobei der Zwischenrahmen mittels wenigstens eines im oberen Bereich des Zwischenrahmens angeordneten Führungshebels geführt ist und zum Begrenzen des freien Ausschwenkens des Enrtevorsatzes Anschäge vorgesehen sind.

Die Funktion einer solchen Erntemaschine, beispielsweise eines Maishäckslers, hängt wesentlich davon ab, dass das abgeschnittene Erntegut, z.B. die Maisstengel, vom Erntevorsatz so weiterbefördert werden, dass sie in den Einzugsspalt der in der Erntemaschine angeordneten Einzugsvorrichtung gelangen, weil sonst die Gefahr des Verstopfens der Maschine besteht. Andererseits hängt die Funktion der Maschine davon ab, dass der Erntevorsatz das Erntegut ungeachtet von Bodenunebenheiten sicher aufnehmen und weitertransportieren kann.

Bei einer bekannten Erntemaschine der eingangs geschilderten Art (DE-A-21 21 181) ist der Erntevorsatz mittels Parallelogrammlenker höhenverstellbar an der Erntemaschine angebracht. Dabei ist die Schwenkachse für den Erntevorsatz am vorderen Ende der Parallelogrammlenker angebracht, so dass die Schwenkachse die Höhenbewegungen der Parallelogrammlenker mitmacht. Der Erntevorsatz ist mittels eines offenen Einhängelagers an der Schwenkachse angehängt. Der Erntevorsatz kann so eine Kippbewegung um die Schwenkachse ausführen, wobei die oberen Parallelogrammlenker zwischen Anschlägen längenverstellbar ausgebildet sind. Das Gewicht des Erntevorsatzes ist durch eine starke Feder in etwa ausbalanciert, so dass der Erntevorsatz gewissermassen schwimmend über den Boden gleitet. Trifft er dabei auf grössere Bodenunebenheiten, so kippt nicht nur der Erntevorsatz um die Schwenkachse, sondern diese vollführt ausserdem häufig eine Bewegung nach oben, so dass ein richtiges Zuführen des abgeschnittenen Gutes zum Einzugsspalt der Einzugsvorrichtung nicht gewährleistet ist.

Ausserdem ist es bei der geschilderten Lagerung des Erntevorsatzes mittels der Parallelogrammlenker sehr schwierig, den Antrieb für die Arbeitsmittel des Erntevorsatzes von der Erntemaschine her so zuzuführen, dass die Bewegungsfreiheit des Erntevorsatzes und der ungehemmte Fluss des abgeschnittenen Erntegutes zur Einzugsvorrichtung aufrechterhalten bleibt.

Der Erfindung liegt die Aufgabe zugrunde, eine Erntemaschine der eingangs geschilderten Art so auszubilden, dass durch die Ausgestaltung des Erntevorsatzes und seiner Lagerung ein einfacher Antrieb der Arbeitsmittel des Vorsatzes ohne Beeinträchtigung der Funktion der Erntemaschine ermöglicht wird.

Zur Lösung dieser Aufgabe sieht die Erfindung bei einer Erntemaschine der eingangs geschilderten Art vor, dass der Erntevorsatz aus einem vorderen, die Gleitsohlen aufweisenden Teil und einem mit diesem Teil durch eine etwa horizontale, quer zur Fahrtrichtung verlaufende Gelenkachse frei schwenkbar verbunden, die Arbeitsmittel enthaltenden hinteren Teil besteht, wobei zum Antrieb der Arbeitsmittel eine koaxial zu der den Zwischenrahmen mit der Erntemaschine verbindenden Schwenkachse angeordnete Antriebswelle vorgesehen ist. Eine solche koaxiale Kraftübertragung durch eine Schwenkachse einer anderen Erntemaschine ist bereits aus US-A 3 293 835 bekannt.

Durch diese Massnahmen wird dem Erntevorsatz der Antrieb ohne Störung seiner Funktion oder seines Zusammenwirkens mit der Einzugsvorrichtung der Erntemaschine auf einfache Art und Weise gesichert, wobei derjenige Teil des Erntevorsatzes, der die Arbeitsmittel aufweist und mit der Einzugsvorrichtung zusammenwirkt, verhältnismassig kleine Schwenkbewegungen ausführen muss, weil der an diesem Teil angelekte, die Gleitsohlen tragende vordere Teil des Erntevorsatzes für sich schwenkbar ist und sich infolgedessen ohne eine zu grosse Auslenkung des hinteren Teils des Erntevorsatzes auf die Bodenunebenheiten einstellen kann.

Besonders günstig ist dabei, wenn die Schwenkachse für den Zwischenrahmen des Erntevorsatzes an wenigstens einem mit der Erntemaschine starr verbundenen, seitlich der Erntemaschine angeordneten Ausleger gelagert ist.

Eine besonders günstige Überführung des Antriebes von der Erntemaschine zum Erntevorsatz kann in der Weise erzielt werden, dass die Schwenkachse für den Zwischenrahmen als Hohlachse ausgebildet und in ihr die Schwenkachse drehbar gelagert ist, und einerseits über einen Kettentrieb von der Erntemaschine aus, insbesondere von einer unteren, ortsfest gealgerten Presswalze der Erntemaschine aus, angetrieben ist, und andererseits über wenigstens ein Winkelgetriebe die im Erntevorsatz angeordneten Arbeitsmittel antreibt.

Dabei kann der Ausleger zur Aufnahme des Kettentriebs hohl ausgebildet sein.

Ein Ausführungsbeispiel der Erfindung ist anhand der nachfolgenden Beschreibung und der Zeichnung erläutert. Dabei zeigen:

Fig. 1 eine Ansicht einer erfindungsgemässen Erntemaschine,

Fig. 2 eine Einzelheit gemäss Pfeil II in Fig. 1 und

Fig. 3 einen Schnitt entlang der Linie III-III in Fig. 1 in vergrössertem Massstab.

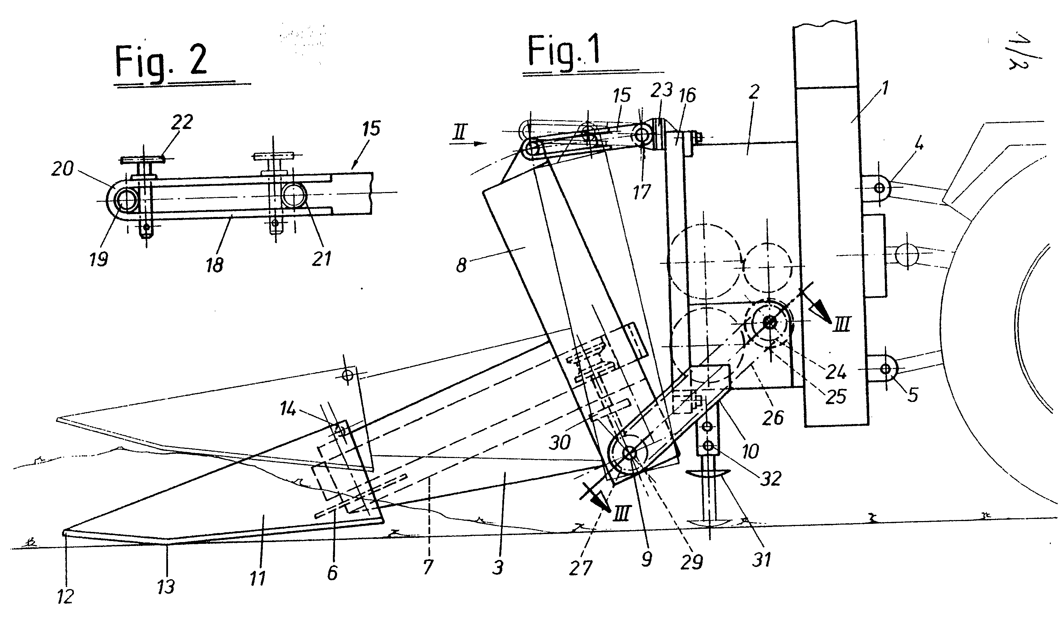

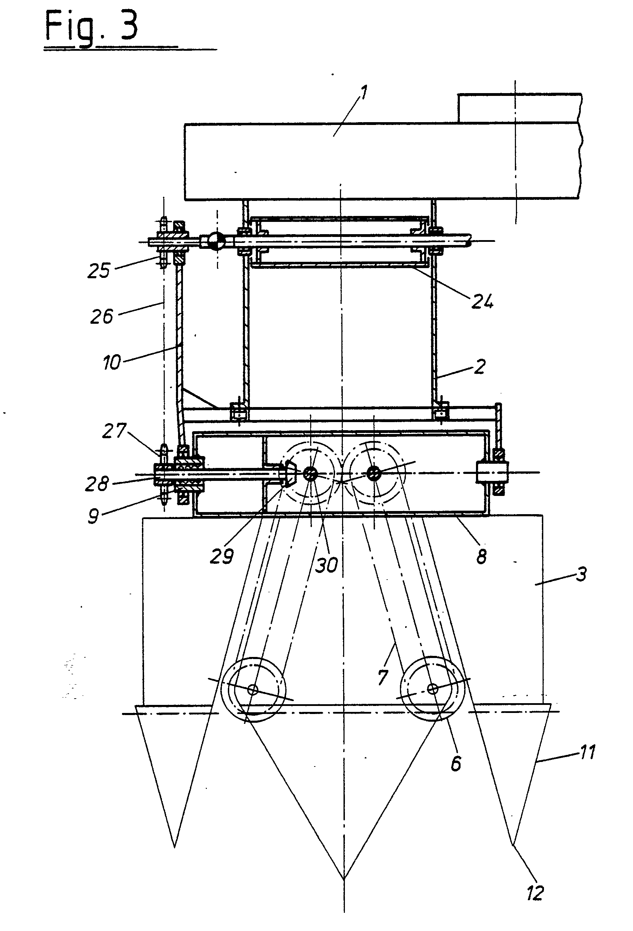

Die in den Fig. 1 bis 3 dargestellte Erntemaschine ist ein Maishäcksler, der im wesentlichen aus einem Häckselwerk 1, einer Vorpress- und Einzugsvorrichtung 2 und einem Erntevorsatz 3 in Form einer Aufnahmeeinrichtung für die Maispflanzen besteht. Der Maishäcksler ist mittels Dreipunktanschlüssen 4, 5 an das Hubwerk einer nur angedeuteten Zugmaschine angebaut.

Der Erntevorsatz 3 ist zweiteilig ausgebildet und trägt eine Schneideeinrichtung 6 zum Abtrennen der Stengel der Maispflanzen sowie umlaufende Ketten, Bänder oder ähnliche Mitnehmer 7 zum Heranführen der abgeschnittenen Maispflanzen an die Vorpress- und Einzugsvorrichtung 2.

Der Erntevorsatz 3 ist mit einem Zwischenrahmen 8 fest verbunden, der um eine im wesentlichen horizontal sowie quer zur Fahrtrichtung der Erntemaschine verlaufende Schwenkachse 9 frei höhenverschwenkbar gelagert ist. Die Schwenkachse 9 ist im Abstand unterhalb der Unterkante der Erntemaschine, und zwar unterhalb der unteren Begrenzung des Häckselwerkes 1 bzw. der Vorpress- und Einzugsvorrichtung 2, an einem an der Erntemaschine angebrachten Ausleger 10, der mit der Erntemaschine fest verbunden ist, gelagert. Die Lagerung der Schwenkachse 9 befindet sich im unteren Teil des Zwischenrahmens 8, der in Richtung auf die Einlauföffnung der Erntemaschine betrachtet, die Form eines auf die Spitze gestellten U's aufweist.

Der Erntevorsatz 3 ist gleichzeitig als Halmteiler ausgebildet. Der vordere Teil 11 des Erntevorsatzes 3 bildet die Halmteilerspitze 12 und ist mit einer Gleitsohle 13 versehen, mit welcher der Erntevorsatz 3 über den Boden gleitet. Anstelle der Gleitsohle könnte auch eine Gleitkufe oder eine Walze bzw. eine Walzenanordnung vorgesehen sein. Der vordere Teil 11 des Erntevorsatzes 3 ist um eine weitere, gleichfalls im wesentlichen horizontal und quer zur Fahrtrichtung der Erntemaschine verlaufende Schwenkachse 14 frei höhenverschwenkbar gelagert. Diese weitere Schwenkachse 14 ist im oberen Teil des vorderen Teiles 11 an dessen bezüglich der Fahrtrichtung abgelegenen Ende angeordnet. Der Erntevorsatz 3 ist somit einerseits als Ganzes in bezug auf die Erntemaschine frei schwenkbar gelagert, und andererseits ist der vordere Teil des Erntevorsatzes in bezug auf den übrigen Teil des Erntevorsatzes gleichfalls frei schwenkbar gelagert.

Der Zwischenrahmen 8 ist an seinem oberen Ende mittels eines Führungshebels 15 geführt, der um einen an einem mit der Erntemaschine fest verbundenen Anbaurahmen 16 angebrachten Anlenkbolzen 17 schwenkbar gelagert ist. Der Führungshebel 15 weist einen U-förmigen Bügel 18 auf, zwischen dem ein Führungsbolzen 19 gelagert ist und zwischen einem vorderen Anschlag 20 und einem hinteren Anschlag 21 verschiebbar geführt ist. Der Führungsbolzen 19 ist in dem beiden Anschlagstellungen mittels je eines am Bügel 18 angebrachten Absteckbolzens 22 feststellbar. Damit wird die freie Ausschenkbarkeit des Zwischenrahmens 8 und des Erntevorsatzes 3 zwischen den Anschlägen 20, 21 gewährleistet.

Um beim Aufheben und Absetzen eine wirksame Anschlagdämpfung zu erreichen, ist der Führungshebel 15 über ein zwischengeschaltetes Dämpfungsglied 23, beispielsweise eines Federpuffers in der Art eines Silentblockes, mit dem Anbaurahmen 16 bzw. dem Zwischenrahmen 8 verbunden.

Der Antrieb für die im Erntevorsatz 3 angeordneten Einrichtungen, im vorliegenden Falle der Schneideinrichtung 6 zum Abtrennen der Stengel der Maispflanzen und der umlaufenden Ketten 7 zum Heranführen der Maispflanzen an die Vorpress- und Einzugsvorrichtung 2, wird von der unteren Presswalze 24 der letztgenannten Einrichtung abgeleitet, die lösbar ausgebildet ist. Mit der Presswalze 24 ist ein Kettenrad 25 drehfest verbunden, das über einen Kettentrieb 26 mit einem weiteren Kettenrand 27 verbunden ist, das auf einer in bezug auf die Schwenkachse 9 drehbar gelagerten Welle 28 drehfest gelagert ist. Der Kettentrieb 26 ist hierbei in dem hohl ausgebildeten Ausleger 10 untergebracht oder seitlich desselben angeordnet. Die zur hohl ausgebildeten Schwenkachse 9 koaxiale Welle 28 ist mit der Eingangswelle eines Winkelgetriebes 29 gekuppelt bzw. mit dieser einstückig ausgebildet. Es ist auch die umgekehrte Lösung möglich, nämlich die Achse voll und die Welle hohl auszubilden. Das Winkelgetriebe 29 treibt über ein Vorgelege 30, das im einzelnen nicht näher dargestellt ist, die Schneideeinrichtung 6 und die umlaufenden Ketten 7 an.

Am Ausleger 10 ist mittels einer lösbaren Verbindung 32, beispielsweise Absteckbolzen, ein Stützglied 31 angebracht, das in wenigstens zwei Stellungen feststellbar ist. Der Ausleger kann auch am Anbaurahmen oder etwa mittig der Erntemaschine angeordnet sein.

**Patentansprüche**

1. Erntemaschine für landwirtschaftliches Gut mit einem Häckselwerk (1), einer diesem vorgeschalteten Einzugsvorrichtung (2) und mit wenigstens einem an die Erntemaschine anbaubaren Erntevorsatz (3), der zum Aufnehmen des Gutes mittels Gleitsohlen (13) über den Boden gleitet und angetriebene Arbeitsmittel (6, 7) enthält und mit einem Zwischenrahmen (8) fest verbunden ist, der um eine im Bereich der Unterkante der Erntemaschine angeordnete, im wesentlichen horizontal sowie quer zur Fahrtrichtung der Erntemaschine verlaufende Schwenkachse (9) frei höhenverschwenkbar gelagert ist, wobei der Zwischenrahmen (8) mittels wenigstens eines im oberen Bereich des Zwischenrahmens (8) angeordneten Führungshebels (15) geführt ist und zum Begrenzen des freien Ausschwenkens des Erntevorsatzes Anschläge (20, 21) vorgesehen sind, dadurch gekennzeichnet, dass der Erntevorsatz (3) aus einem vorderen, die Gleitsohlen (13) aufweisenden Teil (11) und einem mit diesem Teil durch eine etwa horizontale, quer zur Fahrtrichtung verlaufende Gelenkachse (14) frei schwenkbar verbundenen, die Arbeitsmittel (6 und 7) enthaltenden hinteren Teil besteht, wobei zum Antrieb der Arbeitsmittel (6 und 7) eine koaxial zu der den Zwischenrahmen (8) mit der Erntemaschine verbindenden Schwenkachse (9) angeordnete Antriebswelle (28) vorgesehen ist.

2. Erntemaschine nach Anspruch 1, dadurch gekennzeichnet, dass die Antriebswelle (28) und die Schwenkachse (9) für den Zwischenrahmen (8) an wenigstens einem mit der Erntemaschine starr verbundenen, seitlich der Erntemaschine angeordneten Ausleger (10) gelagert sind.

3. Erntemaschine nach einem der Ansprüche 1 oder 2, dadurch gekennzeichnet, dass die Schwenkachse (9) des Zwischenrahmens (8) als Hohlachse ausgebildet und in ihr die Antriebswelle (28) drehbar gelagert ist, und einerseits über einen Kettentrieb (26) von der Erntemaschine aus, insbesondere von einer unteren, ortsfest gelagerten Presswalze (24) der Einzugsvorrichtung (2) der Erntemaschine aus, angetrieben ist und andererseits über wenigstens ein Winkelgetriebe (29) die im Erntevorsatz (3) angeordneten Arbeitsmittel (6 und 7) antreibt.

4. Erntemaschine nach Anspruch 3, dadurch gekennzeichnet, dass der Ausleger (10) zur Aufnahme des Kettentriebs (26) hohl ausgebildet ist.

5. Erntemaschine nach einem der Ansprüche 1 bis 4, dadurch gekennzeichnet, dass die Schwenkachse (14) im Bereich des oberen Randes des vorderen Teils (11) des Erntevorsatzes (3) angeordnet ist.

6. Erntemaschine nach einem der Ansprüche 1 bis 5, dadurch gekennzeichnet, dass der am oberen Ende des Zwischenrahmens (8) angeordnete Führungshebel (15) einen oberhalb des Zwischenrahmens (8) verlaufenden U-förmigen Bügel (18) aufweist, zwischen dem ein Führungsbolzen (19) gelagert und zwischen einem vorderen Anschlag (20) und einem rückwärtigen Anschlag (21) verschiebbar geführt ist.

7. Erntemaschine nach Anspruch 6, dadurch gekennzeichnet, dass der Führungsbolzen (19) in den beiden Anschlagstellungen (20, 21) mittels eines am Bügel (18) des Führungshebels (15) anbringbaren Absteckbolzen (22) feststellbar ist.

8. Erntemaschine nach einem der Ansprüche 1 bis 7, dadurch gekennzeichnet, dass der am oberen Ende des Zwischenrahmens (8) angelenkte Führungshebel (15) über ein zwischengeschaltetes Dämpfungsglied (23), beispielsweise einen Federpuffer in der Art eines Silentblockes mit dem Zwischenrahmen (8) für den Erntevorsatz (3) verbunden ist.

9. Erntemaschine nach einem der Ansprüche 2 bis 8, dadurch gekennzeichnet, dass am Ausleger (10) mittels einer lösbaren Verbindung (32) wenigstens ein Stützglied (31) angebracht ist, das in wenigstens zwei Stellungen feststellbar ist.

## Revendications

1. Machine à récolter des produits agricoles, avec un mécanisme de hachage (1), un dispositif d'enfournement (2) situé en amont de ce dernier et au moins une saillie de ramassage (3) qui, pouvant être rapportée sur la machine à récolter, glisse au-dessus du sol au moyen de semelles de glissement (13) pour recueillir le produit, qui renferme des moyens de travail (6, 7) entraînés et qui est assujettie à un cadre intermédiaire (8) pouvant pivoter librement en hauteur autour d'un axe de pivotement (9) situé dans la zone de l'arête inférieure de la machine à récolter et s'étendant pour l'essentiel à l'horizontale et perpendiculairement à la direction de déplacement de la machine à récolter, auquel cas le cadre intermédiaire (8) est guidé par au moins un levier de guidage (15) disposé dans la région supérieure du cadre intermédiaire (8), et des butées (20, 21) sont prévues pour limiter le pivotement libre de la machine à récolter, caractérisée par le fait que la saillie de ramassage (3) comprend une partie antérieure (11) comportant les semelles de glissement (13) et une partie postérieure renfermant les moyens de travail (6 et 7) et reliée à cette partie, de manière à pivoter librement, par un axe d'articulation (14) sensiblement horizontal et s'étendant perpendiculairement à la direction de déplacement, auquel cas, pour entraîner les moyens de travail (6 et 7), il est prévu un arbre d'entraînement (28) coaxial à l'axe de pivotement (9) reliant le cadre intermédiaire (8) et la machine à récolter.

2. Machine à récolter selon la revendication 1, caractérisée par le fait que l'arbre d'entraînement (28) et l'axe de pivotement (9) pour le cadre intermédiaire (8) sont montés sur au moins un bras en porte-à-faux (10) assujetti à la machine à récolter et disposé sur le côté de la machine à récolter.

3. Machine à récolter selon l'une des revendications 1 ou 2, caractérisée par le fait que l'axe de pivotement (9) du cadre intermédiaire (8) est conformé en un axe creux dans lequel peut tourner l'arbre d'entraînement (28), et est, d'une part, entraîné au moyen d'un entraînement (26) à chaîne, à partir de la machine à récolter, en particulier d'un cylindre presseur (24) inférieur, monté stationnaire, du dispositif d'enfournement (2) de la machine à récolter, et, d'autre part, entraîne les moyens de travail (6 et 7) disposés dans la saillie de ramassage (3), par l'intermédiaire d'au moins un engrenage conique (29).

4. Machine à récolter selon la revendication 3, caractérisée par le fait que le bras (10) est creux pour recevoir l'entraînement (26) à chaîne.

5. Machine à récolter selon l'une des revendications 1 à 4, caractérisée par le fait que l'axe de pivotement (14) est disposé dans la région du bord supérieur de la partie antérieure (11) de la saillie de ramassage (3).

6. Machine à récolter selon l'une des revendications 1 à 5, caractérisée par le fait que le levier de guidage (15) situé à l'extrémité supérieure du cadre intermédiaire (8) présente un étrier (18) en U passant au-dessus du cadre intermédiaire (8), et dans lequel se trouve un axe de guidage (19) mobile entre une butée antérieure (20) et une butée postérieure (21).

7. Machine à récolter selon la revendication 6, caractérisée par le fait que l'axe de guidage (19) peut être bloqué dans les deux positions de butée (20, 21) au moyen d'une goupille (22) insérable dans l'étrier (18) du levier de guidage (15).

8. Machine à récolter selon l'une des revendications 1 à 7, caractérisée par le fait que le levier de guidage (15) articulé à l'extrémité supérieure du cadre intermédiaire (8) est relié au cadre intermédiaire (8) pour la saillie de ramassage (3) par l'intermédiaire d'un organe d'amortissement intercalé (23), par exemple un tampon élastique du type silentbloc.

9. Machine à récolter selon l'une des revendications 2 à 8, caractérisée par le fait qu'au moins un organe de support (31), pouvant être bloqué dans au moins deux positions, est monté sur le bras (10) au moyen d'une liaison amovible (32).

### Claims

1. A harvester for agricultural material having a chopping mechanism (1), a pull-in device (2) arranged forwardly of this mechanism, and at least one intake unit (3), which can be mounted on the harvester and slides over the ground on sliding plates (13) so as to receive the material and which contains driven operating means (6, 7) and is firmly connected to an intermediate frame (8), which is mounted to swing freely upwardly and downwardly about a pivot shaft (9), which is disposed in the zone of the lower edge of the harvester and extends substantially horizontally as well as transversely of the direction of travel of the harvester, the intermediate frame (8) being guided by means of at least one control lever (15), arranged in the upper zone of the intermediate frame (8), and stops (20, 21) being provided for limiting the free outward swinging movement of the intake unit, characterized in that the intake unit (3) consists of a forward part (11), comprising the sliding plates (13), and of a rearward part which is swivellably connected to the forward part by a substantially horizontal hingepin (14), extending transversely of the direction of travel, and which contains the operating means (6 and 7), a drive shaft (28), arranged coaxially with the pivot shaft (9) connecting the intermediate frame (8) to the harvester, being provided.

2. A harvester according to claim 1, characterized in that the drive shaft (28) and the pivot shaft (9) for the intermediate frame (8) are mounted on at least one arm (10), which is rigidly connected to the harvester and is arranged st the side of the harvester.

3. A harvester according to claim 1 or claim 2, characterized in that the pivot shaft (9) of the intermediate frame (8) is constructed as a hollow shaft and the drive shaft (28) is totatably mounted in it, and is driven, on the one hand, through a chain drive (26) by the harvester, particularly by a lower pressure-applying roll (24) of fixed location and associated with the pull-in device (2) of the harvester and, on the other hand, through at least one mitre gear (29), drives the operating means (6 and 7) arranged in the intake unit (3).

4. A harvester according to claim 3, characterized in that the arm (10) for receiving the chain drive (26) is hollow.

5. A harvester according to any one of claims 1 to 4, characterized in that the hingepin (14) is arranged in the zone of the upper edge of the forward part (11) of the intake unit (3).

6. A harvester according to any one of claims 1 to 5, characterized in that the control lever (15), arranged at the upper end of the intermediate frame (8), as a U-shaped bracket (18), which extends above the intermediate frame (8), within which brachet is mounted a guide pin (19) which is displaceably guided between a forward stop (20) and a rearward stop (21).

7. A harvester according to claim 6, characterized in that the guide pin (19) can be immobilized in the two stop positions (20, 21) by means of a peg (22) which can be fitted on the bracket (18) of the control lever (15).

8. A harvester according to any one of claims 1 to 7, characterized in that the control lever (15), hinged to the upper end of the intermediate frame (8), is connected to the intermediate frame (8) for the intake unit (3) by means of an intermediate damping element (23), for example, a resilient pad of the silent block type.

9. A harvester according to any one of claims 2 to 8, characterized in that at least one support element (31), which can be immobilized in at least two positions, is mounted on the arm (10) by means of a releasable connection (22).

# Fig. 2

# Fig.1

0 015 539

# Fig. 3